# EUROPEAN PATENT APPLICATION

(11) **EP 3 970 809 A1**
(43) Date of publication of application: **23.03.2022**
(21) Application number: 19928573.5
(22) Date of filing: 21.10.2019
(51) Int. Cl.: A62D 3/36, A62D 101/40

(54) **EXBEAD FOR REMOVING INORGANIC ACID AND MANUFACTURING METHOD THEREFOR**

(30) Priority: 15.05.2019 KR 20190057037
(71) Applicant: Korea Research Institute of Chemical Technology, Daejeon 34114 (KR)
(72) Inventor: RYU, Beyong Hwan, Daejeon 34114 (KR); SHIN, Soo Il, Daejeon 34114 (KR); JIN, Hangkyo, Daejeon 34114 (KR); KIM, Tae Kyung, Daejeon 34114 (KR); KIM, Jong Woon, Daejeon 34114 (KR)
(74) Representative: dompatent von Kreisler Selting Werner - Partnerschaft von Patent- und Rechtsanwälten mbB
(86) International application number: PCT/KR2019/013819
(87) International publication number: WO 2020/230963

(57) **Abstract**

The present invention relates to a bead for removing inorganic acid and a manufacturing method therefor. More specifically, the present invention relates to a bead for removing inorganic acid, which has excellent performance in the removal of inorganic acid, can reduce potential risks during work, can minimize secondary contamination, and can dramatically increase removal efficiency, and to a manufacturing method therefor.

## Description

### [Technical Field]

The present invention relates to a bead for removing an inorganic acid and a manufacturing method therefor.

More specifically, the present invention relates to a bead for removing an inorganic acid, which has an excellent ability to remove the inorganic acid, and is also able to reduce risk factors that may be caused during working, minimize secondary contamination, and dramatically enhance removal efficiency as well, and a manufacturing method therefor.

### [Background Art]

With the increasing use of various petrochemical products around the living environments, the occurrence of chemical leakage accidents is increasing. Because such chemical leakage accidents cause risks such as toxicity, ignitability, inflammability, secondary chemical reactions, explosions, or the like depending on the components to be leaked, and have an adverse effect on the human body and environment, there is a need for a means to effectively deal with the chemical leakage accidents.

In general, when an inorganic acid leaks at an industry site, a neutralization method of applying a basic disaster prevention agent is used. In particular, among the inorganic acids, hydrofluoric acid is more highly toxic, and causes more serious environmental problems due to leakage when it is not substantially completely removed.

Because basic disaster prevention agents used in a method of removing such a leaked inorganic acid have various characteristics such as a method of administration, a reaction time, secondary pollution generation, storage management, and the like depending on the components thereof, there are many factors to be considered separately when the basic disaster prevention agents are added during a treatment process.

In particular, the inorganic acid is difficult to control due to the high heat of neutralization during a neutralization reaction. Also, it has a lot of difficulties in that it causes environmental contamination or damage to the human body due to the generation of secondary contaminants, and requires a post-treatment process. Especially, hydrofluoric acid causes more serious damage to the human body and environment.

As the conventional technology for removing such an inorganic acid, for example, Patent Document 1 discloses a method of removing a strong acid and calcium carbonate using a mixture. However, the method causes an excessive exothermic reaction and still has a problem in removal efficiency. Because the strong acid is explosively neutralized due to the excessively high exothermic reaction, it is impossible to gain access to the distance at which it may be actually put into use. Also, the strong acid has limitations on its use because it also has limitations on the neutralization efficiency due to the heat generation.

Therefore, there is a need for research and development of a novel scavenger for efficiently removing an inorganic acid, which is easy to introduce, may control the velocity or heat generated during the neutralization reaction, is not harmful to the human body or environment, and does not require complicated processes such as a post-treatment process, and the like.

### [Disclosure]

### [Technical Problem]

An object of the present invention is to provide a bead for removing an inorganic acid, which is capable of effectively performing inorganic acid treatment.

In particular, the inorganic acid has problems in that it is dangerous when it comes into contact with moisture, it is difficult to control the high heat of neutralization generated during the neutralization, and it rapidly increases a reaction velocity. Therefore, to solve these problems, another object of the present invention is to provide an inorganic acid scavenger capable of stably performing a reaction to reduce the risks in the reaction and lowering the heat of reaction, thereby making it easy to control a neutralization process.

In particular, still another object of the present invention is to provide a bead for removing an inorganic acid, which is excellent in that it has significantly improved neutralization/removal efficiency of hydrofluoric acid.

Yet another object of the present invention is to provide a bead for removing an inorganic acid, which has excellent storage characteristics because it does not cause a great change in physical properties with respect to moisture or temperature.

Yet another object of the present invention is to provide a bead for removing an inorganic acid, which is capable of rapidly processing a large amount of an inorganic acid, which makes it possible to dramatically improve the neutralization efficiency.

### [Technical Solution]

In one general aspect, a bead for removing an inorganic acid includes sodium bicarbonate, slaked lime, and clay.

Another general aspect of the prevent invention may be in a shape of the bead manufactured by mixing a powder composition including sodium bicarbonate, slaked lime, and clay.

Still another general aspect of the prevent invention may be a bead in which the powder composition is added to form a shell layer on a surface of the seed using the clay.

In yet another general aspect, a core/shell-type bead for removing an inorganic acid has a core layer containing sodium bicarbonate, slaked lime, and clay; and a shell layer surrounding the core layer and including calcium hydroxide.

In yet another general aspect, a method for manufacturing a core/shell-type bead for removing an inorganic acid is provided, wherein the core/shell-type bead for removing an inorganic acid is manufactured by preparing a seed using clay, forming a core layer by coating surfaces of seed particles with a mixed powder including sodium bicarbonate, slaked lime, and clay, and forming a shell layer by coating the periphery of the core layer with a composition containing calcium hydroxide.

### [Advantageous Effects]

A bead for removing an inorganic acid according to the present invention has advantages in that it has remarkable neutralization performance and can rapidly and efficiently treat a large amount of an inorganic acid.

In particular, the bead for removing an inorganic acid according to the present invention has advantages in that it is easy to reduce or control various risk factors including a rapid reaction or high heat of neutralization generated during the neutralization of the inorganic acid, and it can improve workability.

Also, the bead for removing an inorganic acid according to the present invention has advantages in that it can minimize the damage to the human body or environment caused due to secondary contamination, and has significantly improved long-term storage stability due to the reduced sensitivity to moisture or temperature.

In particular, according to the present invention, the core/shell-type bead for removing an inorganic acid, which includes compositional components according to the present invention, can prevent a rapid reaction or high heat of neutralization generated during neutralization, and also has better removal efficiency of an inorganic acid, particularly removal efficiency of an inorganic acid which has not been easily removed in the art even because it can achieve an effect of removing an inorganic acid with very high efficiency.

Also, according to the present invention, a bi-layered bead for removing an inorganic acid, which includes a core/shell layer including the component of the present invention on an outer surface of a clay seed, is desirable in that it has high long-term usability because beads are not easily shattered or the manufactured beads are not easily crushed when a core layer is well formed on a surface of the clay seed, and also is superior in shape stability. For example, even when a 1 m drop test is performed 50 times, the bead for removing an inorganic acid has a very stable effect by which a crushing degree increases by 50% or more. Also, an exothermic reaction and the like do not explosively occur when it has excellent removal efficiency of an inorganic acid such as hydrofluoric acid, and the like.

Further, especially in the present invention, when a layer including calcium hydroxide is formed as the outermost layer, the outer layer is solidified and cured due to the porosity even when the bead absorbs moisture. Therefore, the bead for removing an inorganic acid shows no difference in neutralization efficiency. Also, even when the bead for removing an inorganic acid is neutralized with an inorganic acid such as hydrofluoric acid, and the like, the bead has a further improved shape preserving property. Therefore, the bead for removing an inorganic acid is more easily recovered in the form of beads even after use. Accordingly, when the shape of the bead collapses into particles and the particles are blown by the wind, the bead for removing an inorganic acid has an effect of preventing the bead particles from acting as a new source of contamination.

### [Description of Drawings]

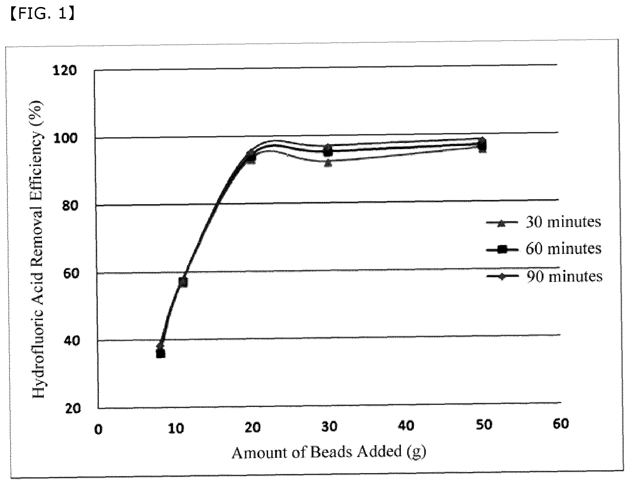

FIG. 1 is a diagram showing the results of hydrofluoric acid removal efficiency of a bead for removing an inorganic acid according to one embodiment of the present invention.

### [Best Mode]

Hereinafter, a bead for removing an inorganic acid according to the present invention and a manufacturing method therefor will be described in detail. The present invention will be more understood from the following description of examples.

The following examples are presented by way of example only to describe the invention, and are not intended to limit the scope of protection defined by the appended claims.

In this case, unless otherwise defined, the technical and scientific terms used herein have the same meaning as commonly understood by one of ordinary skill in the art to which the present invention pertains. Also, the singular forms "a," "an," and "the" used in the specification of the present invention and the appended claims are intended to refer to those including plural referents unless the context clearly dictates otherwise. In addition, the expression "comprise(s)" means that one element recited herein does not exclude the presence or addition of one or more elements which are not further recited herein.

The present invention is an invention that relates a new inorganic acid scavenger in which problems of conventional inorganic acid scavengers are solved, and a shape of the inorganic acid scavenger.

That is, the present invention provides a novel inorganic acid neutralizer having an excellent neutralization effect, which is used to solve the problems of the conventional inorganic acid scavenger, which has a drawback in that strength may be deteriorated because the inorganic acid scavenger is decomposed by moisture in the air when the inorganic acid scavenger is in storage or is added during neutralization, and also has difficulties in controlling the heat of neutralization because high heat of neutralization is generated in an explosive neutralization reaction and also in recovering beads because the beads are crushed in the form of powder when the beads come into contact with moisture during neutralization. Also, the novel inorganic acid neutralizer further enhances the neutralization efficiency.

Therefore, a bead for removing an inorganic acid, which has low heat of neutralization while securing stability, may easily control dispersion and induce a neutralization reaction with improved efficiency, is developed in the present invention.

To achieve the above objects, an aspect of the present invention relates to a bead for removing an inorganic acid which includes sodium bicarbonate, slaked lime, and clay.

Another aspect of the present invention may be a shape of the bead manufactured by mixing a powder composition including sodium bicarbonate, slaked lime, and clay.

Still another aspect of the present invention may be a bead in which the powder composition is added to form a shell layer on a surface of the seed using the clay.

Yet another aspect of the present invention relates to a core/shell-type bead for removing an inorganic acid, which has a core layer containing sodium bicarbonate, slaked lime, and clay; and a shell layer surrounding the core layer and including calcium hydroxide.

Yet another aspect of the present invention relates to a method for manufacturing a core/shell-type bead for removing an inorganic acid, wherein the core/shell-type bead for removing an inorganic acid is manufactured by preparing a seed using clay, forming a core layer by coating surfaces of seed particles with a mixed powder including sodium bicarbonate, slaked lime, and clay, and forming a shell layer by coating the periphery of the core layer with a composition containing calcium hydroxide.

In the present invention, an acid to be removed is an inorganic acid. For example, one or two or more leaked components selected from inorganic acids such as hydrochloric acid, nitric acid, phosphoric acid, sulfuric acid, boric acid, hydrofluoric acid, and the like may be removed.

Hereinafter, a bead for removing an inorganic acid according to the present invention and a manufacturing method therefor will be described in detail.

An aspect of the present invention provides a bead for removing an inorganic acid, which includes sodium bicarbonate, slaked lime, and clay.

In the present invention, when a bead obtained by a combination of the three components is used, the active ingredients neutralize an inorganic acid through a contact reaction with the inorganic acid, and thus have an effect of preventing a rapid reaction or a high temperature or a sudden increase in temperature due to the heat of neutralization and an effect of reducing the risk of secondary contamination.

This is effective in that stable neutralization is possible when compared to other neutralizers that generate high heat of neutralization or release toxic substances, and it does not require a post-treatment process caused due to the secondary contamination. Also, this is effective in that the bead has no problems such as a difficulty in recovering beads as the shape of the bead collapses into particles during neutralization, secondary contamination caused when the bead particles are blown by the wind, and the like, is not harmful to the human body, and may prevent environmental contamination.

According to an aspect of the present invention, the bead for removing an inorganic acid is in a granular type, which is different from a powder, and thus may be sprayed from a relatively remote distance. Therefore, the bead for removing an inorganic acid is very effective in that a neutralization work may be performed without any close access to the scene of an accident caused by the leakage of an inorganic acid.

This bead is composed by binding components including sodium bicarbonate, slaked lime, and clay.

The bead for removing an inorganic acid according to the present invention may realize a stable solid shape using a combination of these components, and also has an effect of achieving excellent neutralization workability because the bead may be introduced to a target place at a remote distance without any scattering when the bead is introduced to a site of acid leakage. In addition, the bead for removing an inorganic acid according to the present invention is more effective in that it may prevent the occurrence of rapid reaction and a sudden increase in temperature caused due to the high heat of reaction during a neutralization process, and may achieve neutralization performance in increasing a processing capacity, and the like.

In the present invention, the composition ratios of the compositional components of the bead for treating an inorganic acid are not limited as long as the object of the present invention can be achieved. For example, 10 to 150 parts by weight of the slaked lime and 10 to 100 parts by weight of the clay may be preferably used based on 100 parts by weight of the sodium bicarbonate. Also, 80 to 120 parts by weight of the slaked lime and 30 to 80 parts by weight of the clay may be more preferably used based on 100 parts by weight of the sodium bicarbonate in terms of the advantages such as neutralization efficiency, a shape preserving property, and the like. However, these ranges are not limited as long as they fall within a range capable of achieving the object of the present invention.

According to the present invention, the bead for removing an inorganic acid may further include components such as calcium carbonate (CaCO₃), sodium carbonate (Na₂CO₃), and the like as long as the contents of the components fall within a range which does not cause the deterioration of performance of the bead.

Because these components may further inhibit a sudden increase in temperature during neutralization of the inorganic acid and increase the strength of the bead, the components are desirable in that the shape of the bead is prevented from being crushed due to the reduced strength of the bead even after the inorganic acid is neutralized.

In this case, the contents of the components are not particularly limited, and, as one non-limiting example, the components may be included at a content of 1 to 50 parts by weight based on 100 parts by weight of the sodium bicarbonate, but the contents of the components are not limited as long as they fall within a range capable of gaining an effect of the present invention.

The clay used in the present invention is not limited as long as it is clay used in the related art. For example, the clay may include one or more selected from the group consisting of kaolinite, halloysite, sericite, pyrophyllite, montmorillonite, saponite, beidellite, laponite, vermiculite, and a mixture thereof, but the present invention is not particularly limited thereto.

In the method for manufacturing an inorganic acid scavenger bead according to the present invention, the bead for removing an inorganic acid, which includes sodium bicarbonate, slaked lime, and clay, is manufactured using a mixed powder of the components, and the manufacturing method is not particularly limited, but one example of the manufacturing method may include a method of manufacturing a bead by a dry method using a circular rotating drum.

In the dry method, a bead is manufactured at a rotation velocity of the circular rotating drum by introducing sodium bicarbonate, slaked lime, and clay into the circular rotating drum at proper amounts. In this case, the rotation velocity may be adjusted in a range capable of controlling the desired particle size, but the present invention is not particularly limited thereto.

In the dry method, a core/shell-type bead may also be manufactured by adding clay to a circular rotating drum to manufacture a seed, introducing sodium bicarbonate, slaked lime, and clay at proper amounts to coat the seed with the resulting mixture.

Further, in the dry method, a bead may be manufactured by adding clay to a circular rotating drum to manufacture a seed using the clay for forming a bead, additionally introducing sodium bicarbonate, slaked lime, and clay at proper amounts to form a core layer on the seed, and introducing clay and a calcium hydroxide powder to further form a shell layer (i. e., a calcium hydroxide layer) outside the core layer.

Of course, a core/shell-type bead may also be manufactured by introducing sodium bicarbonate, slaked lime, and clay at proper amounts without any a seed to form the core layer and introducing clay and a calcium hydroxide powder to further form a shell layer of calcium hydroxide outside the core layer.

Particularly, in the present invention, it is more desirable to provide a bead for removing an inorganic acid, which has a core/shell structure manufactured by introducing the clay and the powder including calcium hydroxide to the core layer including sodium bicarbonate, slaked lime, and clay to form a shell layer in terms of securing further improved performance and long-term stable performance.

In the present invention, when a layer including calcium hydroxide and clay is further formed outside a layer including sodium bicarbonate, slaked lime, and clay, a neutralization effect of an inorganic acid may be desirably further promoted, and the strength of the bead may also be more desirably maintained intact even when the bead is neutralized with the inorganic acid. Also, when the calcium hydroxide of the present invention is included, an outer layer is solidified and cured due to the porosity even when the bead absorbs moisture, the fact of which is not clearly found. Therefore, the bead may be recovered while maintaining a shape of the bead during neutralization. Accordingly, when the shape of the bead collapses into particles and the particles are blown by the wind, the bead for removing an inorganic acid is more desirable in that it has an effect of preventing the bead particles from acting as a new source of contamination.

The compositional ratios of the components of a composition, which is composed to involve binding of the sodium bicarbonate, the slaked lime, and the clay, are not particularly limited, but it is preferred that the composition, for example, includes 10 to 150 parts by weight of the slaked lime and 1 to 100 parts by weight of the clay based on 100 parts by weight of the sodium bicarbonate. This is more effective in that the composite particles forming the core layer have excellent solid shape strength within this range, a rapid reaction is inhibited, it is easy to control the heat of neutralization, and improved neutralization performance is particularly realized, but this content is merely one non-limiting example, and is not limited to the numerical range.

In particular, when the outermost shell is formed using the calcium hydroxide, it has more favorable characteristics in protecting the core layer in terms of maintaining the strength of the bead. Also, it has an effect of inhibiting a rapid reaction from occurring by allowing a target material to be treated to permeate into the core layer compared to when the reaction occurs at the same time as introduction to a site at which acid leakage has occurred, and also has an effect of preventing a large amount of heat from being generated at a time during neutralization. Also, the calcium hydroxide has superior characteristics compared to other metal hydroxides in that it is possible to continuously neutralize the bead because a shape of the bead is maintained as a surface of the bead is hardened by adsorption of moisture, and a situation at which the target material to be treated does not penetrate into the bead does not occur because the porosity is maintained intact even when the bead is hardened, compared to when other neutralizers are used.

In the present invention, when the calcium hydroxide layer is formed, the layer may be formed to further include any one component selected from calcium hydroxide and clay or starch. According to a specific aspect, the shell layer may contain calcium hydroxide and starch, may contain calcium hydroxide and clay, or may contain calcium hydroxide, starch, and clay. In this case, it is more effective that the shell layer includes a combination of calcium hydroxide, starch, and clay in terms of improving a binding force between the core layer and the shell layer and also improving performance imparted to the shell layer.

According to an aspect of the present invention, in the bead having the core/shell structure, a volume of the layer including sodium bicarbonate, slaked lime, and clay based on the total volume of the bead is not particularly limited, but it is preferred that the volume of the layer is greater than or equal to 40 volume%, specifically in a range of 60 to 99 volume%, and more specifically in a range of 70 to 90 volume%, but this volume is merely one non-limiting example, and is not limited to the numerical range.

A particle size of the bead for removing an inorganic acid according to an aspect of the present invention is not particularly limited, but may be in a range of 0.1 to 20 mm, specifically in a range of 0.2 to 15 mm, and more specifically in a range of 0.4 to 10 mm. The bead for removing an inorganic acid has excellent neutralization efficiency and is favorable in achieving a desired effect within this range, but this particle size is merely one non-limiting example, and is not limited to the numerical range.

According to an aspect of the present invention, the core particles may further include an organic alkoxysilane in addition to the mixed powder of sodium bicarbonate and clay. The organic alkoxysilane may be composed of a combination of sodium bicarbonate and clay to enhance the strength of the core particles. Therefore, the core particles have an effect of preventing damage of the particles during storage or transportation as well as the introduction into a site for neutralization works. Also, the core particles have may further enhance the binding force to the shell layer, and is more effective in improving the neutralization performance and efficiency.

The type of the organic alkoxysilane is not particularly limited within a range which does not inhibit the objects of the present invention, but may include tetraethoxysilane, tetramethoxysilane, 3-aminopropyltrimethoxysilane, 3-aminopropyltriethoxysilane, vinyltrimethoxysilane, vinyltriethoxysilane, methyltrimethoxysilane, methyltriethoxysilane, methyldimethoxysilane, methyldiethoxysilane, phenyltrimethoxysilane, phenyltriethoxysilane, diphenyldimethoxysilane, diphenyldiethoxysilane, and the like, but the present invention is not limited thereto. Preferably, the type of the organic alkoxysilane may include 3-aminopropyltrimethoxysilane.

When the organic alkoxysilane is used at a content of 0.1 to 3 parts by weight, based on 100 parts by weight of the composition including sodium bicarbonate, slaked lime, and clay, it is more desirable in that the shape stability is further improved without causing damage to the neutralization efficiency and advantages of fluorine.

When the organic alkoxysilane is used, the curing may easily proceed by adding a basic material (such as amine, and the like) as a curing agent.

Another aspect of the present invention provides a method for removing an inorganic acid, which includes introducing the above-described bead for removing an inorganic acid to a target place to which the inorganic acid is exposed to neutralize and adsorb the inorganic acid.

A method for introducing a bead may be a spray method using a spray system, but the present invention is not limited thereto. The introduction of the bead using the spraying is effective in terms of the stability and efficiency because it is possible to throw the bead at a remote distance unlike the powdery shape, and it is also possible to accurately introduce the beat to a site of contamination.

The present invention is safe from a site to which access is difficult due to the rapid reaction or high heat of neutralization during control work when the inorganic acid is leaked, and from the risks including secondary contamination. In addition, the present invention is expected to be highly used in various control sites including a site of accident of inorganic acid leakage because it can maximize the efficiency in terms of the neutralization capacity and treatment time.

Hereinafter, one example of the bead for removing an inorganic acid according to the present invention will be described. However, it should be understood that the present invention is not limited to the following examples.

### (Example 1)

Kaolinite was introduced into a circular rotating drum, and rotated at 80 rpm for 9 hours to manufacture clay seed particles (moisture content: 10% by weight) having an average particle size of 2.0 mm. The manufactured seed particles were put into the circular rotating drum, and a powder obtained by mixing 33 parts by weight of slaked lime and 5 parts by weight of clay based on 100 parts by weight of sodium bicarbonate was added thereto to obtain a mixed raw material powder. The raw material powder was mixed with the seed (excluding the water content) so that the composition ratio of the raw material powder was a weight ratio of 23:77. Thereafter, the circular rotating drum was rotated at 80 rpm while spraying 20 parts by weight of water based on 100 parts by weight of the raw material powder to form a core layer including sodium bicarbonate, slaked lime, and a clay binder on a surface of the seed. The formed bead was obtained as a granular bead having an average particle size of 3.4 mm, and dried for 30 hours in a 60°C oven to obtain the final bead.

The finally obtained bead was put into a 300 mL Teflon beaker at an amount of 8 g, 11 g, 20 g, 30 g, and 50 g, and 10 mL of an aqueous 52% hydrofluoric acid solution was sprayed onto each bead using a sprayer. Then, a hydrofluoric acid removal test was performed by stirring the hydrofluoric acid solution at 20 rpm for a reaction time of 30 minutes, 60 minutes, and 90 minutes. The solution after the reaction was filtered through a filter paper, and the filtered solution was subjected to an ion chromatograph (Metrohm, ICFLEX 930) analysis to analyze a content of residual fluorine. The hydrofluoric acid removal efficiency is shown in FIG. 1.

As seen from FIG. 1, it can be seen that the hydrofluoric acid removal efficiency of 93% or more was observed regardless of the reaction time even when 20 g of the granular bead for removing hydrofluoric acid according to the present invention was added to 10 mL of an aqueous 52% hydrofluoric acid solution.

### (Example 2)

After the bead finally obtained in Example 1 was manufactured, a composition for forming a shell layer, which includes 100 parts by weight of calcium hydroxide, 20 parts by weight of kaolinite, and 10 parts by weight of wheat flour based on 100 parts by weight of the manufactured bead was added. Thereafter, the circular rotating drum was rotated at 100 rpm while spraying 15 parts by weight of water based on 100 parts by weight of the added composition to form a shell layer on surfaces of the core particles, thereby manufacturing a bead for removing hydrofluoric acid. The manufactured bead was added to a ceramic container, and thermally treated at 60°C for 30 hours in an oven to obtain a final bead. An average particle size of the final bead was 3.7 mm. A hydrofluoric acid removal efficiency test was performed in the same manner as in Example 1. As a result, it can be seen that the hydrofluoric acid removal efficiency of approximately 99% was observed in a reaction time of 30 minutes even when only 20 g of the bead was added to 10 mL of the aqueous 52% hydrofluoric acid solution.

### (Example 3)

A bead was manufactured in the same manner as in Example 2, except that 3 parts by weight of tetraethoxysilane and 3 parts by weight of 3-aminopropyltrimethoxysilane were added at a weight of 1:1, based on 100 parts by weight of the bicarbonate, when the core layer was formed of a mixture of bicarbonate and slaked lime in Example 2. A hydrofluoric acid removal efficiency test was performed in the same manner as in Example 1. As a result, it can be seen that the hydrofluoric acid removal efficiency of approximately 97% was observed in a reaction time of 30 minutes even when only 20 g of the bead was added to 10 mL of the aqueous 52% hydrofluoric acid solution. Also, when a drop test was performed 100 times at a height of 1 m on the manufactured inorganic acid scavenger, a crushing rate of the bead was 8% by weight when compared to Example 2, indicating that an effect of significantly increasing the crushing rate of the bead when compared to 11% by weight of Example 2 was able to be achieved.

### (Comparative Example)

A bead was manufactured in the same manner as in Example 1, except that the calcium hydroxide in Example 1 was used instead of calcium hydroxide. A hydrofluoric acid removal efficiency test was performed in the same manner as in Example 1 using the bead. As a result, it can be seen that the hydrofluoric acid removal efficiency of approximately 75% was merely observed even when 50 g of the bead was added to the aqueous 52% hydrofluoric acid solution.

### (Example 4)

A mixed powder obtained by mixing 50 parts by weight of slaked lime and 10 parts by weight of clay was added based on 100 parts by weight of sodium bicarbonate to obtain a mixed raw material powder. A circular rotating drum was rotated at 90 rpm while spraying 15 parts by weight of water based on 100 parts by weight of the raw material powder to obtain a granular bead having an average particle size of 3.2 mm. Then, the granular bead was dried for 30 hours in a 60°C oven to obtain a final bead. A hydrofluoric acid removal test was performed in the same manner as in Example 1 using the final bead. As a result, the removal efficiency of hydrofluoric acid was 88% by weight.

Hereinabove, although the present invention has been described with reference to the limited embodiments thereof, they have been provided only for assisting in the entire understanding of the present invention. Therefore, the present invention is not limited to the exemplary embodiments. Various modifications and changes may be made from this description by those skilled in the art to which the present invention pertains.

Therefore, the scope and spirit of the present invention should not be limited to the embodiments as described herein, and the following claims as well as all modifications equal or equivalent to the claims are all intended to fall within the scope and spirit of the invention.

## Claims

1. A seed/core/shell-type granular bead for removing an inorganic acid, comprising:
a seed layer comprising clay;
a core layer positioned outside the seed layer and comprising sodium bicarbonate, slaked lime, and clay; and
a shell layer surrounding the core layer and containing calcium hydroxide.

2. The granular bead of claim 1, wherein the granular bead comprises 10 to 150 parts by weight of the slaked lime and 1 to 100 parts by weight of the clay, based on 100 parts by weight of the sodium bicarbonate.

3. The granular bead of claim 1, wherein the core layer has a volume ratio of 40 to 99% by volume, based on the total volume of the bead.

4. The granular bead of claim 1, wherein the clay comprises any one selected from the group consisting of kaolinite, halloysite, sericite, pyrophyllite, montmorillonite, saponite, beidellite, laponite, vermiculite, and a mixture thereof.

5. The granular bead of claim 1, wherein the core layer further comprises an organic alkoxysilane.
